# EUROPEAN PATENT APPLICATION

(11) **EP 4 559 550 A1**
(43) Date of publication of application: **28.05.2025**
(21) Application number: 24213501.0
(22) Date of filing: 18.11.2024
(51) Int. Cl.: A63F 13/52, A63F 13/355, G06T 15/04

(54) **CODING SCHEME FOR VIDEO GAME TEXTURES**

(30) Priority: 22.11.2023 GB 202317825
(71) Applicant: Sony Interactive Entertainment Europe Limited, London W1F 7LP (GB); Sony Interactive Entertainment LLC, San Mateo, CA 94404 (US)
(72) Inventor: COLES, David, c/o Sony Interactive Entertainment LLC, San Mateo, 94404 (US); GREEN, Lawrence Martin, c/o Sony Interactive Entertainment Europe Limited, London, W1F 7LP (GB)
(74) Representative: Murgitroyd & Company

(57) **Abstract**

The present invention relates to methods and systems for game texture substitution in cloud gaming. The method includes receiving data including information identifying one or more video game textures to be included in the stream. The method further includes providing texture data for the one or more video game textures identified in the received data. The texture data comprises at least one identifier from a texture coding scheme, where each identifier represents image data associated with a corresponding video game texture. The texture coding scheme, provided in a memory associated with the cloud gaming computing system, comprises a plurality of identifiers, where each identifier represents the image data associated with the corresponding video game texture. A corresponding method for processing the stream at a client device is also provided.

## Description

### FIELD

The present invention relates to methods and systems for video game texture substitution in cloud gaming.

### BACKGROUND

Video game textures are combined with geometry data (e.g., 3D mesh data) to create the visual appearance of objects, characters, environments, and other elements within a video game. Video game textures play a crucial role in enhancing the visual fidelity and realism of a game and affect the overall gaming experience.

In traditional gaming, video game textures are stored on local hardware, such as a gaming console or PC, and are rendered in real-time as the game is being played. They are stored as image files with specific formats (e.g., PNG, JPEG, TIFF, or specialised formats like DDS or TGA) and resolutions. The most common texture resolutions are 1024×1024, 2048×2048, 4096×4096, or higher, depending on the level of detail required and the performance capabilities of the hardware.

A current area of rapidly growing technology is the field of cloud gaming, also known as game streaming. In cloud gaming, the game is run on remote servers in data centres, and data is streamed to a player's device over the internet.

In cloud gaming, video game textures need to be streamed to the player's device continuously as they play. This requires efficient data streaming and rendering pipelines to ensure minimal lag and fast loading times. Cloud gaming platforms aim to balance the use of high-quality video game textures with the need for smooth and responsive gameplay.

Aspects and embodiments were conceived with the foregoing in mind.

### SUMMARY

Aspects of the present disclosure are set out in the accompanying independent and dependent claims. Combinations of features from the dependent claims may be combined with features of the independent claims as appropriate and not merely as explicitly set out in the claims.

According to a first aspect of the present disclosure, there is provided a computer-implemented method, comprising: receiving, by a cloud gaming computing system via a communication channel, a request from a client device to initiate gameplay of a cloud video game; executing the cloud video game on a computing device of the cloud gaming computing system; providing, in a memory associated with the cloud gaming computing system, a texture coding scheme comprising a plurality of identifiers, wherein each identifier corresponds to a respective video game texture, wherein each video game texture is associated with respective image data; generating, by the cloud gaming computer system, a stream, comprising: receiving data from the computing device executing the cloud video game, wherein the data includes information identifying a plurality of video game textures to be included in the stream; providing texture data for the plurality of video game textures to be included in the stream, the texture data comprising at least one identifier from the texture coding scheme, wherein each identifier represents the image data associated with the corresponding video game texture; and sending the stream to the client device via the communication channel, wherein the stream includes the texture data.

The invention as claimed solves the problems associated with the prior art by providing, in an output stream, an identifier in place of image data for one or more video game textures using a texture coding scheme. This enables the amount of data in a stream including texture data to be reduced, as the identifier is provided instead of image data for one or more textures. The amount of data that is required to be transferred to the client device over the communication channel is therefore minimised and latency is reduced, ensuring smoother gameplay.

Optionally, the communication channel is a wireless communication channel.

Optionally, the texture coding scheme may equivalently be referred to as a texture enumeration scheme, or a texture substitution scheme, or a texture substitution-by-identifier scheme. Optionally, the texture coding scheme may be simply referred to as a coding scheme. Optionally the texture coding scheme may be referred to as a shared texture coding scheme, as the scheme is "shared" or "known" by both the cloud computing system (or the memory associated therewith) and the client device (or the memory associated therewith).

Optionally, the received data and the stream further comprise geometry data and texture metadata, wherein the texture metadata includes information defining how to apply the texture data to the geometry data.

Optionally, the geometry data includes 3D mesh data, or geometry vertex data for a plurality of virtual objects in a scene of the cloud video game.

Optionally, the received data and the stream further comprise shader data.

Optionally, the shader data includes information identifying one or more shader programs to be used with the texture data.

Optionally, the shader data includes one or more shader programs to be used with the texture data.

Optionally, providing the texture data includes providing image data for one or more video game textures that are not included in the texture coding scheme.

Optionally, the texture data includes providing a respective identifier from the texture coding scheme for each of the plurality of video game textures to be included in the stream, such that the texture data in the stream does not include any image data. As such, in some embodiments, the video game texture data in the stream output to the client device may consist entirely of identifiers from the texture coding scheme.

Optionally, the received data includes image data associated with one or more of the plurality of video game textures to be included in the stream. Providing the texture data may comprise substituting the image data of one or more of the plurality of video game textures with the corresponding identifier from the texture coding scheme.

Optionally, in the received data the information identifying the plurality of video game textures to be included in the stream comprises, for at least one video game texture, a filename or code associated with the video game texture. Thus, the received data may not comprise the image data corresponding to one or more video game textures, but the received data may comprise information identifying the video game textures, such as a filename or code associated with each video game.

Optionally, the method includes monitoring API calls by the computing device executing the cloud video game to obtain the filename or code associated with at least one video game texture to be included in the stream.

Optionally, providing the texture data comprises substituting the filename or code associated with one or more of the video game textures with the corresponding identifier from the texture coding scheme.

The received data and stream may include game data and/or haptic feedback data.

Optionally, each video game texture relates to one or more of a base colour, alpha transparency, roughness, metallicity, specularity, glossiness, normal map, displacement map, depth map, light map, or shadow map. It will be appreciated that this list is not exhaustive.

Optionally, each identifier (in the texture coding scheme) is at least one unique numeric or alphanumeric character.

Optionally, the received data and the stream further comprise audio data.

Optionally, the computer-implemented method further comprises compressing the stream prior to transmission to the client device.

Optionally, the client device is a gaming console, personal computer, laptop, tablet computer, or mobile device.

In a second aspect of the present disclosure, there is provided a cloud gaming computing system, comprising: a network interface; at least one computing device; a processor; a memory communicatively coupled to the processor, the memory comprising instructions operable, when executed by the processor, to cause the processor to carry out the method of any previous embodiment or example of the first aspect of this disclosure.

In a third aspect of the present disclosure, there is provided a computer-implemented method, comprising: providing, in a memory associated with a client device, a texture coding scheme comprising a plurality of identifiers, wherein each identifier corresponds to a video game texture, wherein each video game texture is associated with respective image data; outputting a request from the client device to initiate gameplay of a cloud video game; receiving, at the client device, a stream including texture data, the texture data including one or more identifiers; processing the stream at the client device, including substituting each identifier with the image data of the corresponding video game texture defined in the texture coding scheme; and rendering the video game at the client device.

It will be appreciated that the client device reverses the texture coding techniques applied by the cloud computing system. For each identifier from the texture coding scheme the client device retrieves the corresponding image data from the memory associated with the client device. Thus, the first aspect of the present disclosure is from the perspective of the cloud computing system, and the second aspect is from the perspective of the client device.

Optionally, the texture coding scheme is stored in a memory of the client device.

Optionally, the texture coding scheme is stored remotely and is accessed by the client device.

Optionally, the method comprises outputting the rendered video game on a display screen in communication with the client device.

In a fourth aspect of the present disclosure, there is provided a computing system, comprising: a display screen; and a client device comprising a processor and memory; wherein, the client device and display screen are operably connected by a communication network; and wherein, the computing system is configured to carry out the method of any embodiment or example of the third aspect of the disclosure.

Optionally, the display screen is integral to the client device.

The client device may be any type of computing device, such as, but not limited to, a desktop (PC) computer, a mobile phone, a tablet computer, a gaming console, or a laptop computer.

### BRIEF DESCRIPTION OF THE DRAWINGS

Embodiments of this disclosure will be described hereinafter, by way of example only, with reference to the accompanying drawings in which like reference signs relate to like elements and in which:
**Figure** 1 shows a simplified block diagram of a system that is used to preload game content onto a cloud game server according to an embodiment of this disclosure;
**Figure** 2 is a block diagram representing a computing device according to an embodiment of this disclosure;
**Figure 3** illustrates a system for cloud gaming according to an embodiment of this disclosure;
**Figure 4** illustrates a computer-implemented method for generating, and sending to a client device, a stream including texture data by a cloud gaming computer system according to an embodiment of this disclosure;
**Figure 5** illustrates an example of how a texture coding scheme is applied according to an embodiment of this disclosure; and
**Figure 6** illustrates a computer-implemented method for receiving and processing a stream including texture data by a client device according to an embodiment of this disclosure.

### DETAILED DESCRIPTION

Embodiments of this disclosure are described in the following with reference to the accompanying drawings.

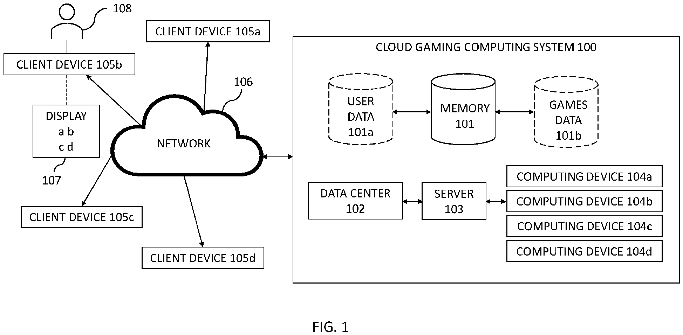

Referring to FIG. 1, an example system used to load game files for a game (which may also be referred to in the present disclosure as a cloud video game) available through a cloud gaming computing system 100 is shown. The system includes a plurality of client devices 105a-105d that are communicatively connected to the cloud gaming computing system 100 over a network 106, such as the internet.

A client device 105 may include, but is not limited to, a video game playing device (games console), a smart TV, a smartphone, laptop, personal computer (PC), etc. The client device is configured to receive information such as a stream from the cloud gaming computing system 100, via the network 102. The client device may also be referred to in the present disclosure as a computing device or a user computing device.

When a request to access the cloud gaming computing system 100 is received from a client device 105, the cloud gaming computing system 100 accesses user account information stored in a memory 101 (which may also be referred to in the present disclosure as a cloud storage), specifically in user data 101a, to identify a user 108 associated with the client device 105b through which the request is initiated. In some embodiments, the cloud gaming computing system 100 may also validate the identified user 108 in order to determine all the games the user is authorised to view/play. Following user account identification/validation, the cloud gaming computing system 100 accesses game titles information stored in memory 101, specifically in games data 101b, to identify the game titles that are available at the cloud gaming computing system 100 for the user 108 initiating the request. The client device 105b from where the request is initiated may or may not be registered with the cloud gaming computing system 100, when the request was initiated. If the user of the client device initiating the request is not a registered user, then the cloud gaming computing system 100 may identify the user as a new user and select the game titles (for e.g., a default set of game titles) that are appropriate for a new user. The identified game titles (a, b, c, d) are returned to the client device 105b for presenting on a display 107, as shown in FIG. 1A.

User interaction at one of the game titles (a, b, c, d) on the client device 105b is detected and a signal is sent to the cloud gaming computing system 100. In response to the signal received from the client device 105b, the cloud gaming computing system 100 proactively determines a data centre where the game is being hosted and sends a signal to the identified data centre 102 to load the game associated with the game title for which the user interaction is detected. In some embodiments, more than one data centre may be hosting the game.

The identified data centre 102 may select a server 103 at the data centre 102 to initiate the game on the server 103. The server 103 may include a plurality of computing devices 104a-104d and the server may determine which one of the plurality of computing devices 104a-104d to use to load the game. The computing device 104 may be similar to an independent game console, or may be a rack-mounted server or a blade server. Other types of game consoles, including game stations, etc., and other forms of blade server may also be engaged for hosting the identified game.

Once the computing device 104b is identified, the generic game-related code for the game is loaded onto the computing device 104b and a signal is returned to the client device 105b over the network 106 identifying the computing device 104b on which the game is initiated. The loaded game is thus made available to the user 108.

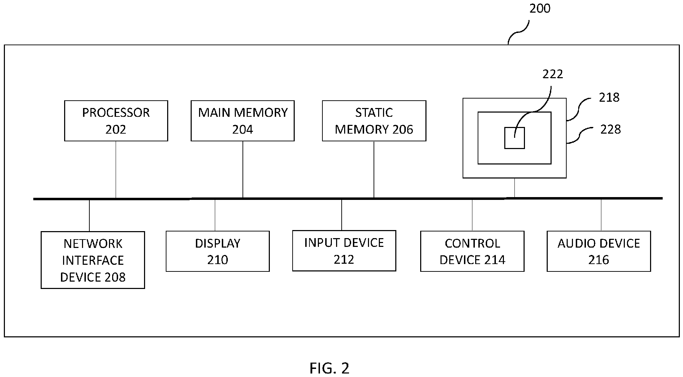

FIG.2 is a block diagram of one example implementation of a computing device according to an embodiment of the present disclosure. The computing device is associated with executable instructions for causing the computing device to perform any one or more of the methodologies discussed herein. The computing device 200 may form part of the cloud gaming computing system (e.g., computing device 104), or it may be a local client computing device (e.g., client device 105). In alternative implementations, the computing device 200 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 200 includes a processing device 202, a main memory 204 (e.g., read-only memory (ROM), flash memory, dynamic random-access memory (DRAM) such as synchronous DRAM (SDRAM) or Rambus DRAM (RDRAM), etc.), a static memory 206 (e.g., flash memory, static random-access memory (SRAM), etc.), and a secondary memory (e.g., a data storage device 218), which communicate with each other via a bus 230. Processing device 202 represents one or more general-purpose processors such as a microprocessor, central processing unit, or the like. More particularly, the processing device 202 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 202 may also be one or more special-purpose processing devices such as an application specific integrated circuit (ASIC), a field programmable gate array (FPGA), a digital signal processor (DSP), network processor, or the like. Processing device 202 is configured to execute the processing logic (instructions 222) for performing the operations and steps discussed herein.

The computing device 200 may further include a network interface device 208. The computing device 200 also may include a video display unit 210 (e.g., a liquid crystal display (LCD) or a cathode ray tube (CRT)), an alphanumeric input device 212 (e.g., a keyboard or touchscreen), a cursor control device 214 (e.g., a mouse or touchscreen), and an audio device 216 (e.g., a speaker).

The data storage device 218 may include one or more machine-readable storage media (or more specifically one or more non-transitory computer-readable storage media) 228 on which is stored one or more sets of instructions 222 embodying any one or more of the methodologies or functions described herein. The instructions 222 may also reside, completely or at least partially, within the main memory 204 and/or within the processing device 202 during execution thereof by the computer system 200, the main memory 204 and the processing device 202 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

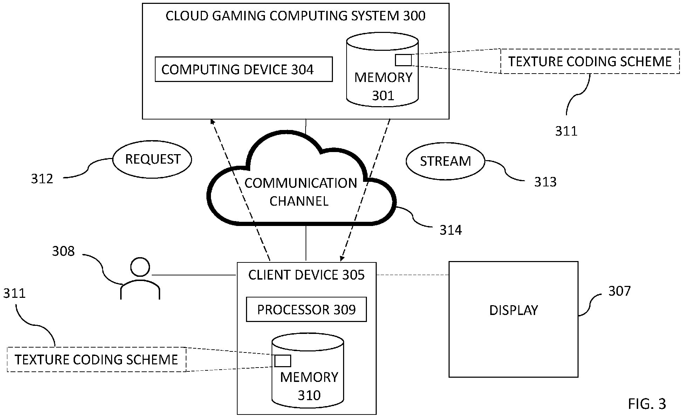

Referring to FIG. 3, a system for streaming video game texture data to a client device 305 according to an embodiment of this disclosure is shown. The system includes a client device 305 communicatively connected to a cloud gaming computing system 300 through a communication channel 314, such as the internet. This may be a wireless communication channel. A request 312 to initiate gameplay of a game may be transmitted from the client device 305 to the cloud gaming computing system 300 via the communication channel 314.

The system further comprises at least one display 307 (which may also be referred to in the present disclosure as a display device or display screen). The display 307 is configured to receive and display a video game. It will be appreciated that in some implementations, the display 307 can be a head-mounted display. The client device 305 and display 307 are operably connected by a network or connection, which may be a wireless connection. In some embodiments, the display 307 is integral to the client device 305.

The client device 305 (discussed above with reference to FIG. 2) may include various other components, such as a battery, speaker, and antennas (not shown). The client device 305 comprises a processor 309 to execute various modules stored in a memory 310. The memory 310 is associated with the client device 305, but may not be provided by the client device itself. The client device 305 further comprises a codec, or decoder comprising decoding logic. The decoding logic may include hardware, firmware, and/or software stored on the memory 310.

The memory 310 also includes a texture coding scheme 311 (or texture substitution scheme or texture enumeration scheme), which is separate to and distinct from the standard video encoding scheme used to compress a video frame.

In the present disclosure, a texture coding scheme generally refers to the representation of video game textures in a digital format. In gaming, a texture is an image that is applied to a virtual object in a scene of a video game to alter the appearance of the virtual object. Often, a texture has an associated bitmap image file, but other image data can be used. A video game texture may, in non-limiting examples, relate to a base colour, alpha transparency, roughness, metallicity, specularity, glossiness, normal map, displacement map, depth map, light map, or shadow map, for example. In some embodiments, there is a texture coding scheme 311 specific to each game stored at the cloud gaming computing system 300. In other embodiments, textures may be shared between different games, such that the same texture coding scheme 311 can be used for a plurality of video games.

Thus, the memory 301 and the memory 310 may each store a database of video game texture image files and their associated identifier according to the shared texture coding scheme.

In the present disclosure, the texture coding scheme 311 uniquely associates a video game texture with an identifier i.e., an ID. The identifier is optionally a unique numeric or alphanumeric character. In a non-limiting example, a video game texture for an image of a mountain (e.g., rocky_texture_mountain) may have a unique identifier "0". The unique identifier may have a variable-length representation integer. In some embodiments, the unique identifier may be 1 or 2 bytes. Alternatively, the unique identifier may be more than 2 bytes. The identifier represents the image data associated with a corresponding video game texture.

The request 312, which is transmitted from the client device 305 over the communication channel 314, is received at the cloud gaming computing system 300. The cloud gaming computing system 300 comprises at least one computing device 304 on which the games stored at the cloud gaming computing system 300 may be executed.

The cloud gaming computing system 300 is configured to generate a stream 313 for outputting to the client device 305, wherein the steam 313 includes texture data.

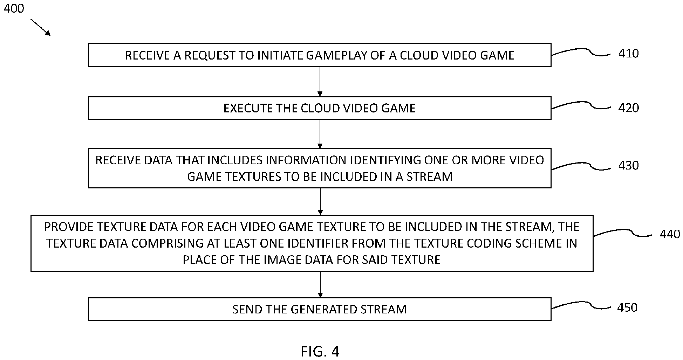

FIG. 4 illustrates a computer-implemented method 400 for generating, and sending to a client device 305, a stream 313 including texture data, by a cloud gaming computer system 300, according to an embodiment of this disclosure.

At method step 410, a request 312 to initiate gameplay of a game is received from a client device 305, via a communication channel 314. At method step 420, in response to the request 312, the game is executed on a computing device 304 of the cloud gaming computing system 300.

At method step 430, data is received from the computing device 304 executing the cloud video game. The data includes information identifying one or more video game textures to be included in a stream 313. As explained above, each video game texture is associated with respective image data. The image data may be a bitmap image file, or other format of image file or image data. The information identifying the one or more video game textures to be included in the stream may comprise, for at least one video game texture, a filename or code associated with the video game texture. The filename or code may be obtained by monitoring the API calls by the computing device 304 executing the cloud video game. Optionally, the data received includes the image data for one or more of the video game textures.

In some embodiments, the data received may also include geometry data. Geometry data may include 3D mesh data (3D mesh), or geometry vertex data, for one or more virtual objects in a scene of a cloud video game. The 3D mesh data may comprise vertices (vertex points), edges, and faces that define the shape of a virtual object. Vertices are represented by three coordinates (x, y, z). Edges are lines connecting pairs of vertices. Faces are polygons formed by connecting a series of vertices with edges. In addition to the information identifying one or more game textures and geometry data, the data may also include texture metadata. Texture metadata includes information defining how to apply the image data associated with a video game texture to the geometry data.

In addition to texture/geometry data, shader data may also be included in the received data. The shader data may include information identifying one or more shader programs to be used with the texture data. Alternatively, or additionally, the shader data may include one or more shader programs to be used with the texture data. Shader programs are specialised programs that run on a graphics processing unit (GPU) and are responsible for determining the appearance and behaviour of virtual objects in a scene of the game. In some embodiments, the shader programs are written in shader languages such as OpenGL Shading Language (GLSL) or High-Level Shading Language (HLSL). The type of shader program may include: a Vertex Shader, a Fragment Shader, Geometry Shader, Tessellation Control Shader and Tessellation Evaluation Shader, or Compute Shader. Shader programs may be sent to the client-side, for use in rendering at the client side, in several forms, such as text source code, a platform-agnostic intermediate format, or compiled binary form for a specific GPU. The shader programs are further compressible/translatable into a more optimal format for transmission over the communication channel 314.

The data may further include audio data, cache data, and/or game data. The game data may include game state information, metadata, and/or haptic feedback data.

At method step 440, texture data for the stream 313 is provided. According to the present disclosure, step 440 includes, for at least one video game texture to be included in the stream 313, providing the corresponding identifier associated with said video game texture in the texture coding scheme, instead of including the image data for said video texture. For example, in the texture data provided or collated at step 440, the rocky_texture_mountain video game texture may be represented by the corresponding identifier (e.g., "0") from the texture coding scheme 311 stored in the memory 301. In some embodiments, all the video game textures identified in the received data may be represented in the texture data at step 440 by the corresponding identifiers from the texture coding scheme 311 stored in the memory 301.

In some embodiments, the texture data provided at step 440 may include the image data for one or more video game textures. For example, if one or more video game textures are not included in the texture coding scheme 311, then the associated image data is included in the texture data in the stream 313.

Advantageously, by effectively replacing the image data of one more video game textures in the stream 313 with the corresponding identifier from the texture coding scheme, the amount of data in the stream 313 is reduced. Data transfer over the communication channel is therefore minimised, and latency is reduced.

It will be appreciated that the stream 313 include other data in additional to the texture data. This other data may include geometry data, texture metadata, shader data, audio data, video data, and/or game data, as defined above.

The cloud gaming computer system 300 may additionally generate haptic feedback data, which is also packetised into network packets (thereby producing haptic feedback packets) for transmission over the wireless communication channel 314.

At method step 450, the stream 313 is sent to the client device 305, via the communication channel 314. In some embodiments, the stream 313 is compressed with either lossy or lossless formats prior to transmission.

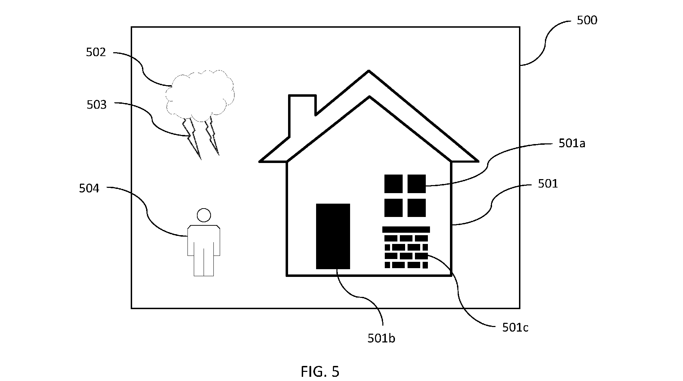

Referring to FIG. 5, a visual representation of how the texture coding scheme 311 is applied to one or more virtual objects is shown. Specifically, FIG. 5 shows an example scene 500 of a cloud video game. The example scene 500 comprises a plurality of virtual objects such as a house 501, cloud 502, lightning bolt 503, and person 504. Each virtual object (e.g., the house 501, cloud 502, lightning bolt 503, and person 504) may be defined by geometry data and have one or more video game textures applied. For example, the house 501 may have a single video game texture applied (e.g., a house outline image), or the house may have a base colour defined by a first video game texture, and a second video game texture may apply windows 501a, a door 501b, or a brick texture (to a portion of the house) 501c. One or more video game textures may also be applied to the lightning bolt 503, such as a shiny texture and/or metallic texture (not shown).

Each video game texture 501a, 501b, 501c is an image having image data, wherein the image data comprises a plurality of pixel values. Pixel value refers to the numerical representation of the colour or intensity of a single point in an image. The intensity can be both relative (e.g., 50%) or absolute (e.g., 100 cd/m²). Each pixel has a specific location in an image and is assigned a pixel value that corresponds to its colour or greyscale intensity. In a greyscale image, each pixel's value typically ranges from 0 to 255, with 0 representing black and 255 representing white. The values in between represent various shades of grey. In a colour image, each pixel is typically represented as a combination of three colour channels: red, green, and blue (RGB). The pixel value for each channel usually ranges from 0 to 255, with 0 indicating the absence of that colour and 255 indicating the maximum intensity of that colour. For example, a bright red pixel would have a pixel value of 255,0,0. The pixel values may be paired with additional colour-space information. Luma and chroma pixel values (YUV) may alternatively be used in video and image data to represent colour and brightness information, instead of RGB pixel values.

In the present disclosure, the image data of one or more of the video game textures is not included in the output stream, as the image data is instead represented by the corresponding identifier from the texture coding scheme 311. For example, in FIG. 5 the video game textures are labelled as 501a, 501b and 501c. For simplicity we can consider these labels to be the identifiers used in the texture coding scheme. As such, the texture data for scene 500 of the video game would be the list of identifiers, 501a, 501b, 501c. The texture metadata provided would specific that textures 501a, 501b and 501c are applied to given portions of the virtual object corresponding to the house 501. Thus, providing the texture data includes providing a respective identifier from the texture coding scheme 311 for each of the plurality of video game textures to be included in the stream, such that in some embodiments the texture data in the stream does not include any image data. In some embodiments, the texture data may comprise both ID number(s) and image data (e.g., pixel (colour) values).

In a non-limiting example, a metallic texture may be substituted using the texture coding scheme, but an underlying colour texture may not be included in the texture coding scheme and so the image data corresponding to the underlying colour is included in the texture data in the stream 313. As a result, a combination of image data (pixel value(s)) and IDs may be included in the stream 313 as texture data.

The way that a video game binds image data for a texture, i.e., applies the texture, to a virtual object typically results in a numerical or alphanumeric texture-ID that is used when referencing that texture. By monitoring the API calls of the cloud computing device running the video game (when the video game applies textures to virtual objects), it is possible to obtain a copy of both the unique identifier and image data. This information is obtained by the cloud gaming computing system 300, or forwarded to the cloud gaming computing system 300. Thus, this can be the information defining the game textures in the scene 500. The numerical or alphanumeric texture-ID may be the identifier in the texture coding scheme, or the identifier may be a separate/distinct ID. In some embodiments the image data may be stored with the identifier as part of the texture coding scheme 311.

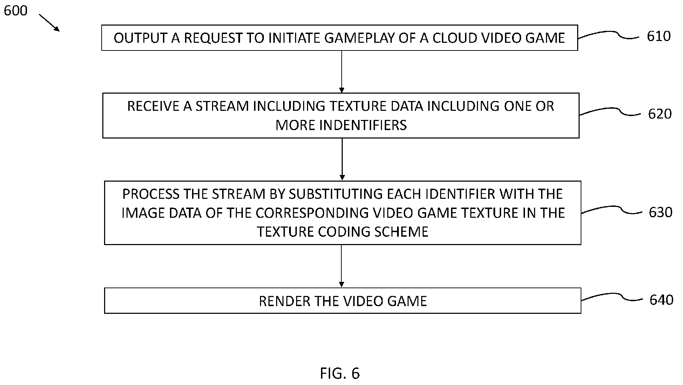

FIG. 6 illustrates a computer-implemented method 600 for receiving and processing a stream 313 including texture data, by a client device 305, according to an embodiment of this disclosure.

At method step 610, a request 312 is output from the client device 305 to initiate gameplay of a cloud video game.

At method step 620, the stream 313 is received at the client device 305, from the cloud gaming computing system 300, via the communication channel 314. The stream 313 includes texture data including one or more identifiers. Each identifier corresponds to a video game texture associated with respective image data. In some embodiments, if the stream 313 was compressed prior to transmission from the cloud computing system 300, it is decompressed (or decoded) at the client device 305 as part of step 620. Systems and methods for decompressing (or decoding) a compressed stream 313 are well known in the art and vary depending on the compression technique used. In some embodiments, the client device 305 is configured to determine which compression technique has been used, based on the received compressed stream 313, and reverses the compression using the corresponding decompression technique.

At method step 630, the stream 313 is processed, which includes substituting each identifier in the texture data with the image data of the corresponding video game texture defined in the texture coding scheme 311, which is stored in the memory 310. Since the client device 305 and cloud gaming computing system 300 know which game is being played, they use the same texture coding scheme 311 (stored in memory 301 and memory 310, respectively), which may be specific to the game being played. Alternatively, the texture coding scheme 311 may be stored on a local persistent storage (not shown) allowing video game textures to be cached between sessions.

The steam 313 comprises other data in addition to the texture data, this step 630 can include processing the other data (e.g., audio data, geometry data, game data, shader data, etc).

The client device 305 may generate client-side video data, for rendering on a display 307, by applying the one or more video game textures to one or more virtual objects in a scene of the cloud video game, which is defined in geometry data and texture metadata. The geometry data and texture metadata may be included in stream 313 and received at the client device 305. Alternatively, the geometry data and texture metadata may be stored at the client device 305, in the memory 310 or a local persistent storage.

At method step 640, the video game is rendered at the client device 305. The rendered video game is then output to a display or a display device, to be displayed to the user.

Accordingly, there has been described methods and systems for substituting video game textures with identifiers in cloud gaming transmissions. A method includes generating, by a cloud gaming computer system, a stream including texture data. The method includes receiving data including information identifying one or more video game textures to be included in the stream. The method further includes providing texture data for the one or more video game textures identified in the received data. The texture data comprises at least one identifier from a texture coding scheme, where each identifier represents image data associated with a corresponding video game texture. The texture coding scheme comprises a plurality of identifiers, where each identifier represents the image data associated with the corresponding video game texture. A corresponding method for processing the stream at a client device is also provided.

Further embodiments or aspects of the present disclosure are defined in the following numbered clauses:
1. A computer-implemented method, comprising: receiving, by a cloud gaming computing system via a communication channel, a request from a client device to initiate gameplay of a cloud video game; executing the cloud video game on a computing device of the cloud gaming computing system; providing, in a memory associated with the cloud gaming computing system, a texture coding scheme comprising a plurality of identifiers, wherein each identifier corresponds to a respective video game texture, wherein each video game texture is associated with respective image data; generating, by the cloud gaming computer system, a stream, comprising: receiving data from the computing device executing the cloud video game, wherein the data includes information identifying a plurality of video game textures to be included in the stream; providing texture data for the plurality of video game textures to be included in the stream, the texture data comprising at least one identifier from the texture coding scheme, wherein each identifier represents the image data associated with the corresponding video game texture; and sending the stream to the client device via the communication channel, wherein the stream includes the texture data.
2. The computer-implemented method of clause 1, wherein: the received data and the stream further comprise geometry data and texture metadata, wherein the texture metadata includes information defining how to apply the texture data to the geometry data.
3. The computer-implemented method of clause 2, wherein: the geometry data includes 3D mesh data, or geometry vertex data for a plurality of virtual objects in a scene of the cloud video game.
4. The computer-implemented method of any preceding clause, wherein: the received data and the stream further comprise shader data.
5. The computer-implemented method of clause 4, wherein: the shader data includes information identifying one or more shader programs to be used with the texture data; and/or the shader data includes one or more shader programs to be used with the texture data.
6. The computer-implemented method of any preceding clause, wherein providing the texture data includes providing image data for one or more video game textures that are not included in the texture coding scheme.
7. The computer-implemented method of any of clauses 1 to 5, wherein providing the texture data includes providing a respective identifier from the texture coding scheme for each of the plurality of video game textures to be included in the stream, such that the texture data in the stream does not include any image data.
8. The computer-implemented method of any preceding clause, wherein the received data includes image data associated with one or more of the plurality of video game textures to be included in the stream, wherein providing the texture data comprises substituting the image data of one or more of the plurality of video game textures with the corresponding identifier from the texture coding scheme.
9. The computer-implemented method of any preceding clause, wherein in the received data the information identifying the plurality of video game textures to be included in the stream comprises for at least one video game texture, a filename or code associated with the video game texture.
10. The computer-implemented method of clause 9, further comprising: monitoring API calls by the computing device executing the cloud video game to obtain the filename or code associated with at least one video game texture to be included in the stream.
11. The computer-implemented method of clause 9 or clause 10, wherein providing the texture data comprises substituting the filename or code associated with one or more of the video game textures with the corresponding identifier from the texture coding scheme.
12. The computer-implemented method of any preceding clause, wherein: each video game texture relates to one or more of a base colour, alpha transparency, roughness, metallicity, specularity, glossiness, normal map, displacement map, depth map, light map, or shadow map.
13. The computer-implemented method of any preceding clause, wherein: each identifier is at least one unique numeric or alphanumeric character.
14. The computer-implemented method of any preceding clause, wherein: the received data and the stream further comprise audio data and/or game data.
15. The computer-implemented method of any preceding clause, further comprising: compressing the stream prior to transmission.
16. The computer implemented method of any preceding clause, wherein the client device is a gaming console, personal computer, laptop, tablet computer, or mobile device.
17. A cloud gaming computing system, comprising: a network interface; at least one computing device; a processor; a memory communicatively coupled to the processor, the memory comprising instructions operable, when executed by the processor, to cause the processor to carry out the method of any previous clause.
18. A computer-implemented method, comprising: providing, in a memory associated with a client device, a texture coding scheme comprising a plurality of identifiers, wherein each identifier corresponds to a video game texture, wherein each video game texture is associated with respective image data; outputting a request from the client device to initiate gameplay of a cloud video game; receiving, at the client device, a stream including texture data, the texture data including one or more identifiers; processing the stream at the client device, including substituting each identifier with the image data of the corresponding video game texture defined in the texture coding scheme; and rendering the video game at the client device.
19. The computer-implemented method of clause 18, wherein: the texture coding scheme is stored in a memory of the client device.
20. The computer-implemented method of clause 18, wherein: the texture coding scheme is stored remotely and is accessed by the client device.
21. A computing system, comprising: a display screen; and a client device comprising a processor and memory; wherein, the client device and display screen are operably connected by a communication network; and wherein, the computing system is configured to carry out the method of any of claims 18-20.
22. The computing system of clause 21, wherein the display screen is integral to the client device.

Although particular embodiments of this disclosure have been described, it will be appreciated that many modifications/additions and/or substitutions may be made within the scope of the claims.

## Claims

1. A computer-implemented method, comprising:
receiving, by a cloud gaming computing system via a communication channel, a request from a client device to initiate gameplay of a cloud video game;
executing the cloud video game on a computing device of the cloud gaming computing system;
providing, in a memory associated with the cloud gaming computing system, a texture coding scheme comprising a plurality of identifiers, wherein each identifier corresponds to a respective video game texture, wherein each video game texture is associated with respective image data;
generating, by the cloud gaming computer system, a stream, comprising:
receiving data from the computing device executing the cloud video game, wherein the data includes information identifying a plurality of video game textures to be included in the stream;
providing texture data for the plurality of video game textures to be included in the stream, the texture data comprising at least one identifier from the texture coding scheme, wherein each identifier represents the image data associated with the corresponding video game texture; and
sending the stream to the client device via the communication channel, wherein the stream includes the texture data.

2. The computer-implemented method of claim 1, wherein:
the received data and the stream further comprise geometry data and texture metadata, wherein the texture metadata includes information defining how to apply the texture data to the geometry data.

3. The computer-implemented method of claim 2, wherein:
the geometry data includes 3D mesh data, or geometry vertex data for a plurality of virtual objects in a scene of the cloud video game.

4. The computer-implemented method of any preceding claim, wherein:
the received data and the stream further comprise shader data; and
the shader data includes information identifying one or more shader programs to be used with the texture data; and/or
the shader data includes one or more shader programs to be used with the texture data.

5. The computer-implemented method of any preceding claim, wherein providing the texture data includes providing image data for one or more video game textures that are not included in the texture coding scheme.

6. The computer-implemented method of any of claims 1 to 4, wherein providing the texture data includes providing a respective identifier from the texture coding scheme for each of the plurality of video game textures to be included in the stream, such that the texture data in the stream does not include any image data.

7. The computer-implemented method of any preceding claim, wherein the received data includes image data associated with one or more of the plurality of video game textures to be included in the stream, wherein providing the texture data comprises substituting the image data of one or more of the plurality of video game textures with the corresponding identifier from the texture coding scheme.

8. The computer-implemented method of any preceding claim, wherein in the received data the information identifying the plurality of video game textures to be included in the stream comprises for at least one video game texture, a filename or code associated with the video game texture.

9. The computer-implemented method of claim 8, further comprising:
monitoring API calls by the computing device executing the cloud video game to obtain the filename or code associated with at least one video game texture to be included in the stream.

10. The computer-implemented method of claim 8 or claim 9, wherein providing the texture data comprises substituting the filename or code associated with one or more of the video game textures with the corresponding identifier from the texture coding scheme.

11. The computer-implemented method of any preceding claim, wherein:
each video game texture relates to one or more of a base colour, alpha transparency, roughness, metallicity, specularity, glossiness, normal map, displacement map, depth map, light map, or shadow map; and/or
the received data and the stream further comprise audio data and/or game data.

12. The computer-implemented method of any preceding claim, wherein:
each identifier is at least one unique numeric or alphanumeric character.

13. A cloud gaming computing system, comprising:
a network interface;
at least one computing device;
a processor;
a memory communicatively coupled to the processor, the memory comprising instructions operable, when executed by the processor, to cause the processor to carry out the method of any previous claim.

14. A computer-implemented method, comprising:
providing, in a memory associated with a client device, a texture coding scheme comprising a plurality of identifiers, wherein each identifier corresponds to a video game texture, wherein each video game texture is associated with respective image data;
outputting a request from the client device to initiate gameplay of a cloud video game;
receiving, at the client device, a stream including texture data, the texture data including one or more identifiers;
processing the stream at the client device, including substituting each identifier with the image data of the corresponding video game texture defined in the texture coding scheme; and
rendering the video game at the client device.

15. The computer-implemented method of claim 14, wherein:
the texture coding scheme is stored in a memory of the client device, or the texture coding scheme is stored remotely and is accessed by the client device.
